# EUROPEAN PATENT SPECIFICATION

(11) **EP 3 206 066 B1**
(45) Date of publication and mention of the grant of the patent: **13.01.2021**
(21) Application number: 16157641.8
(22) Date of filing: 26.02.2016
(51) Int. Cl.: G02B 6/38, G02B 6/44

(54) **PRECONNECTORIZED OPTICAL CABLE ASSEMBLY**
VORKONNEKTORISIERTE OPTISCHE KABELANORDNUNG
ENSEMBLE DE CÂBLE OPTIQUE PRÉ-CONNECTORISÉ

(30) Priority: 12.02.2016 EP 16155524
(43) Date of publication of application: 16.08.2017
(73) Proprietor: Corning Optical Communications LLC, Charlotte, NC 28216 (US)
(72) Inventor: Gomez, Michelle, 10961 Berlin (DE); Przemyska, Magdalena Czeslawa, 93-372 Lódz (PL); Andrzejewski, Tomasz, 92-444 Lódz (PL); Piotrowski, Mateusz Dariusz, 95-200 Pabianice (PL); Matthies, Jürgen, 58300 Wetter (DE); Harrison, Carl Randall, Decatur, 76234 (US)
(74) Representative: Epping - Hermann - Fischer

(56) References cited:
- EP-A1- 2 426 536
- WO-A1-2013/055935
- JP-A- 2002 162 537
- US-A- 5 224 187
- US-A1- 2005 213 900

## Description

### Technical Field

The present invention relates generally to a preconnectorized optical cable assembly, for example, a preconnectorized fiber optic drop cable assembly being used in optical networks that bring fiber to the 'x' location (FTTx) and the like.

### Background

Communication networks are used to transport a variety of signals such as voice, video, data transmission, and the like. Traditional communication networks use copper wires in cables for transporting information and data. However, copper cables have drawbacks because they are large, heavy, and can only transmit a relatively limited amount of data. On the other hand, an optical waveguide is capable of transmitting an extremely large amount of bandwidth compared with a copper conductor. Moreover, an optical waveguide cable is much lighter and smaller compared with a copper cable having the same bandwidth capacity.

Consequently, optical waveguide cables replaced most of the copper cables in long-haul communication network links, thereby providing greater bandwidth capacity for long-haul links. However, many of these long-haul links have bandwidth capacity that is not being used. This is due in part to communication networks that use copper cables for distribution and/or drop links on the subscriber side of the central office. In other words, subscribers have a limited amount of available bandwidth due to the constraints of copper cables in the communication network. Stated another way, the copper cables are a bottleneck that inhibit the subscriber from utilizing the relatively high-bandwidth capacity of the long-hauls links.

As optical waveguides are deployed deeper into communication networks, subscribers will have access to increased bandwidth. But there are certain obstacles that make it challenging and/or expensive to route optical waveguides/optical cables deeper into the communication network, i.e., closer to the subscriber. For instance, making a suitable optical connection between optical waveguides is much more difficult than making an electrical connection between copper wires. This is because optical connections require special tools and equipment, highly trained craftsman, along with precision components. Additionally, as the communication network pushes toward subscribers, the communication network requires more connections, which compounds the difficulties of providing optical waveguides to the premises of the subscriber. Hence, the routing of optical waveguides to the proverbial last mile of the network has yet to enjoy commercial success.

A common way to connect optical waveguides is by using optical connectors. Optical connectors generally hold the mating optical waveguides in respective ferrules of the mating connectors. The ferrules and optical waveguides therein require polishing of the end face for proper operation. Polishing a ferrule is a relatively complex process that generally requires several steps along with inspection and testing using precision equipment to verify an acceptable insertion loss. In other words, installing connectors is best performed in a factory setting under ideal working conditions. However, it is often necessary that optical waveguides of optical cables have to be coupled by means of optical connectors in the field where there is no or less specialized equipment available.

Terminating an optical cable with a connector may become particularly complex depending on the construction of the optical cable and the strain relief performance required. For instance, if the tensile elements are stranded and embedded in the jacket, then accessing and strain-relieving the tensile elements can provide challenges. If an optical cable comprising tensile elements has to be terminated by an optical connector, the tensile elements have to be secured in the optical connector such that the tensile elements and attachment withstand a defined tensile load without being damaged to enable strain relief in the cable assembly and to preserve the performance of the optical waveguides. Moreover, as higher strain-relief forces are desired for the cable assemblies strain-relieving the cable to the connector becomes more challenging.

WO 2013/055935 A1 and JP 2002-162537 A and US 2005/213900A1 show connectorized fiber optic cables, wherein tensile members of the cables are secured on an optical connector terminating the cables. The plug connector of the connectorized fiber optic cable known in US2005/213900 A1 comprises a crimp housing with grooves for receiving the plurality of tensile elements of the cable.

There is an unresolved need to provide an optical cable assembly being terminated by a plug connector that may withstand high-strain relief forces, while still securing the tensile elements of the cable efficiently and reliably to the plug connector with a defined strain relief and connector footprint for the preconnectorized optical cable assembly. Summary

According to the invention, the preconnectorized cable assembly comprises a cable and at least one plug connector, the cable comprises an optical transmission element comprising at least one optical waveguide, a plurality of tensile elements, a cable jacket and at least one plug connector. The at least one plug connector is attached to an end section of the cable, thereby connectorizing the at least one optical waveguide. The at least one plug connector comprises a connector assembly for securing the at least one optical waveguide. The at least one plug connector further comprises a crimp housing having a longitudinal passageway for passing the at least one optical waveguide therethrough. The at least one plug connector further comprises at least one cable clamping portion and a connector assembly clamping portion. The at least one cable clamping portion secures the plurality of tensile elements. The connector assembly clamping portion secures a portion of the connector assembly. The at least one plug connector further comprises at least one tensile element securing component in which the one or more of plurality of tensile elements is secured. The crimp housing comprises at least one groove for depositing the at least one tensile element securing component.

The tensile elements may comprise any suitable material, for example a metallic material, or may be configured as aramid fibers or fiberglass rovings. The tensile element securing component may be configured as one of a tensile element sleeve and a solder and a small clamp/clip etc.. The tensile element securing component may be bonded or attached to the cable tensile elements. According to other possible embodiments, the tensile element securing component may be latched or clinched/crimped or hooked or squeezed, etc. in the crimp housing to provide the cable retention. The securing of the tensile element of the cable to the tensile element securing component may depend on the type of tensile element used in the cable and the tensile element securing component along with the strain relief performance desired. For instance, metal tensile elements could be welded or crimped to the tensile element securing component, whereas glass-reinforced plastic (GRPs) rods may use an adhesive for attachment to the tensile element securing component.

According to an embodiment of the preconnectorized optical cable assembly, the crimp housing may comprise at least two shells respectively having a cavity. The optical transmission element is placed in the cavity of a first one of the shells. The first shell may further comprise a portion of the groove formed appropriate to insert the at least one tensile element securing component. A second one of the shells also comprises a cavity to dispose the optical transmission element and another portion of the groove formed appropriate to dispose the at least one tensile element securing component. The preconnectorized optical cable assembly may further comprise a crimp band to crimp the two halves of the crimp housing, i.e. the first and the second shell, together. In the mated state of the two shells, the respective cavity of the first and the second shell forms the passageway of the crimp housing for passing the at least one optical waveguide.

The optical transmission element is placed in the cavity of the first shell, i.e. the cable clamping portion of the crimp housing. A portion of the connector assembly is placed in the connector assembly clamping portion of the crimp housing/the first shell of the crimp housing. The tensile elements are inserted in the at least one tensile element securing component and the at least one tensile element securing component is crimped or the tensile elements are otherwise secured/fixed within the at least one tensile element securing component. The at least one tensile element securing component is placed in the portion of the groove of the first shell.

The second shell is placed on the first shell so that the portion of the connector assembly is placed in the connector assembly clamping portion of the second shell, and the optical transmission element is placed in the cavity of the second shell, and the at least one tensile element securing component is placed in the portion of the at least one groove of the second shell. The two shells are secured by means of the crimp band that is slid over the two shells and crimped. Since the tensile elements are fixed/secured in the at least one groove of the shells between the at least two shells, the position of the tensile elements relative to the plug connector is set so that the tensile elements carry the tensile forces before the optical waveguides.

### Brief Description of the Drawings

Figure 1 schematically depicts a portion of an optical communication network for providing fiber to the subscriber at location 'x' (FTTx).
Figure 2 schematically illustrates a drop link portion of the optical network of Figure 1 having a preconnectorized optical cable.
Figure 3 shows a preconnectorized optical cable assembly terminated with a plug connector and a complimentary receptacle for mating with the plug connector.
Figure 4 shows an example of an optical cable to be terminated by a plug connector.
Figure 5 shows a perspective view of a partially assembled preconnectorized optical cable assembly being terminated by a plug connector, useful to understand the invention.
Figure 6 shows a perspective view of the partially assembled preconnectorized optical cable assembly of Figure 5 with tensile elements of the cable arranged on a crimp housing to be secured to a plug connector.
Figure 7 shows a partially assembled perspective view of an example of the
preconnectorized optical cable assembly of Figure 6 comprising tensile elements being secured to a crimp housing of a plug connector using a crimp band.
Figure 8 shows a preassembled perspective view of another example of a preconnectorized optical cable assembly comprising tensile elements to be secured to a plug connector by a crimp band.
Figure 9 shows a partially assembled perspective view of another example useful to understand the invention of a preconnectorized optical cable assembly comprising tensile elements to be secured to a plug connector.
Figure 10 shows a partially assembled view of the tensile element securing component depicted in Figure 9 for securing the tensile elements of the preconnectorized optical cable.
Figure 11 shows a partially assembled perspective view of an embodiment according to the invention of a preconnectorized optical cable assembly comprising tensile elements being mounted to a plug connector by tensile element securing components.
Figure 12 shows a perspective view of an embodiment according to the invention of a preconnectorized optical cable assembly comprising tensile elements being mounted to a plug connector by tensile element securing components.

### Detailed Description

Embodiments of the preconnectorized optical cable assembly will now be described more fully hereinafter with reference to the accompanying drawings. The preconnectorized optical cable assembly may, however, be embodied in many different forms and should not be construed as limited to the embodiments set forth herein; rather, these embodiments are provided so that the disclosure will fully convey the scope of the preconnectorized optical cable to those skilled in the art. The drawing are not necessarily drawn to scale but are configured to clearly illustrate the different embodiments of the preconnectorized optical cable assembly.

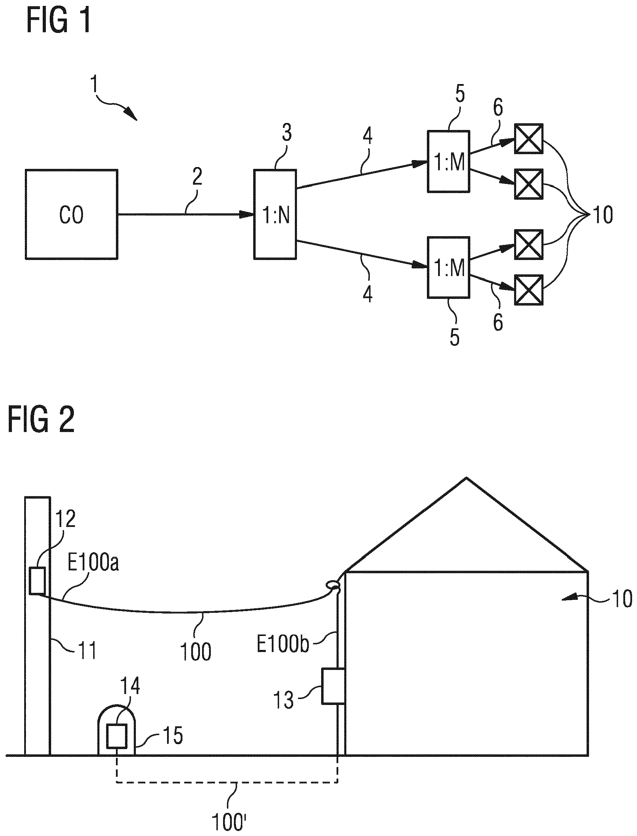

Figure 1 schematically depicts a portion of an optical waveguide network 1 in an exemplary fiber to the location 'x' (FTTx). 'x' in the acronym represents the end location of the optical waveguide, for instance, FTTC is fiber to the curb. In this case, network 1 is a fiber to the premises (FTTP) application. FTTP architectures advantageously route at least one optical waveguide to the premises, thereby providing a high bandwidth connection to the subscriber. Applications to locations other than to the curb or premises are also possible.

Downstream from a central office CO, network 1 includes a feeder link 2, a first 1:N splitter 3, a distribution link 4, a second 1:M splitter 5, and at least one drop link 6. Drop link 6 comprises a preconnectorized optical cable, in particular a fiber optic drop cable, suitable for outdoor environments. The preconnectorized optical cable effectively and economically streamlines the deployment and installation of optical waveguides into the last mile of the fiber optic network such as to the premises 10.

Although, network 1 shows a simple configuration of one type of FTTx architecture, other networks can employ the preconnectorized optical cable. Other networks may include other suitable components such as distribution closures, amplifiers, couplers, transducers, or the like. Likewise, other networks besides FTTx architectures can also benefit from the concepts of the preconnectorized optical cable.

For explanatory purposes, Figure 2 schematically illustrates two preconnectorized cables 100 and 100' being routed to a premise 10 using different exemplary techniques. Specifically, Figure 2 shows a first preconnectorized cable 100 being routed to premises 10 in an aerial application and a second preconnectorized cable 100' being routed to premises 10 in a buried application. In the aerial application, a first end E100a of preconnectorized cable 100 is attached at a first interface device 12 located on pole 11 and a second end E100b of preconnectorized cable 100 is attached at interface device 13 located at the subscriber premises 10. In buried applications, the first and second ends of preconnectorized cable 100' are respectively connected to interface device 14 located inside pedestal 15. The interface devices include at least one receptacle for making the optical connection with an end of the preconnectorized optical cable.

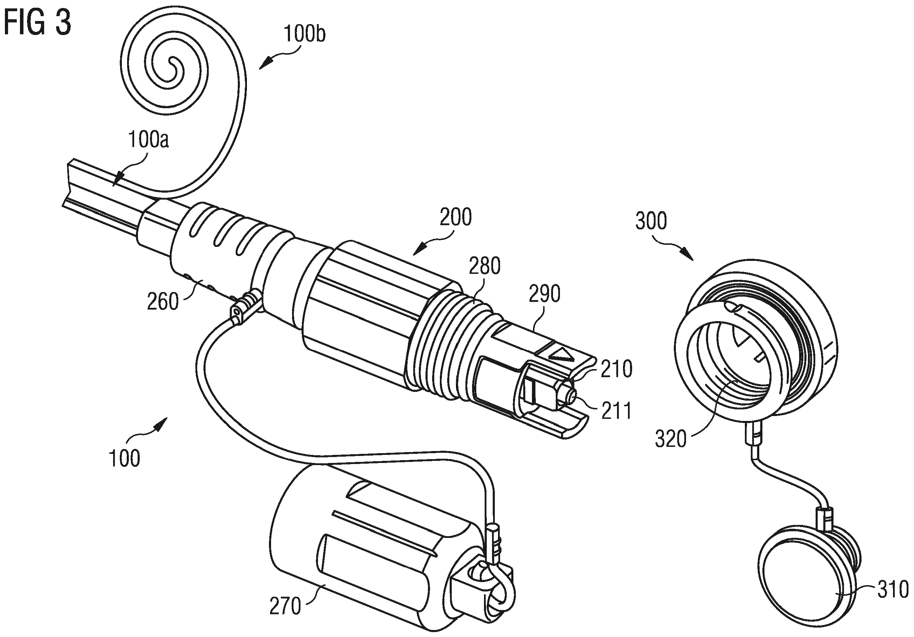

Figure 3 shows a preconnectorized optical cable assembly 1000 having a cable 100 terminated with a plug connector 200. Cable 100 comprises an optical component 100a and an optional electrical component 100b, for example a toning lobe. The optical cable 100 is terminated by plug connector 200 mounted upon at least one end of the cable 100. As shown in Figure 3, a portion of the electrical component 100b is separated and coiled before the optical plug connector 200, thereby keeping it out of the way. The plug connector 200 uses a connector assembly 210 of the SC type, but it is also possible to use other types of connector assemblies such as LC, FC, ST, MT, and MT-RJ as a connector assembly of the plug connector. The connector assembly 210 comprises a ferrule 211 in which an optical waveguide of the optical component 100a of the cable 100 is arranged. Plug connector 200 also includes a connector boot 260, a protective cap 270, a coupling nut 280 and a shroud 290.

The protective cap 270 is used for shielding the connector assembly 210, and in particular, an end face of a connector ferrule 211 of the connector assembly from damage. The coupling nut 280 is formed as an outer structure of the connector boot 260 of the plug connector. The coupling nut 280 is configured such that the plug connector 200 may be screwed to a receptacle 300. Figure 3 shows the receptacle 300 comprising a protective cap 310 being removed from the receptacle. The plug connector 200 may be screwed in an inner thread 320 of the receptacle to be fixed at the receptacle 300.

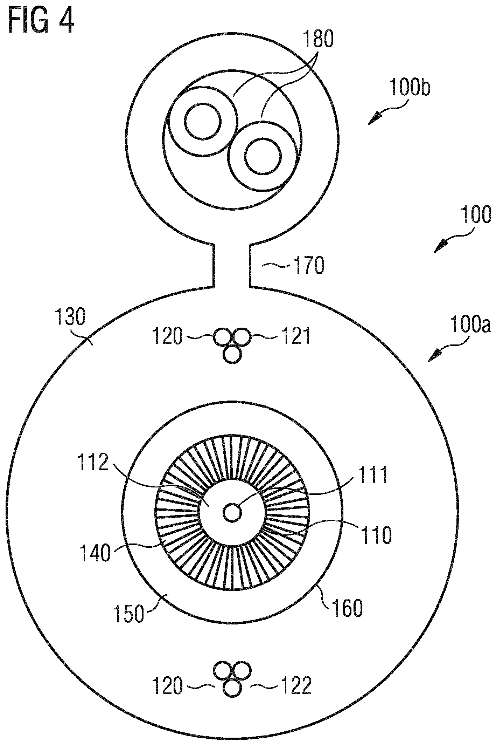

Figure 4 shows an example of an optical cable 100 being configured as a figure-eight cable. As used herein, the term "strength component" means a strength element of the cable having anti-buckling strengths, while the term "strength member" means a strength element of the cable that lacks anti-buckling strengths. The term "tensile element" means either a strength component or a strength member of the cable.

The optical cable comprises an optical component/optical lobe 100a and an electrical component 100b, for example a toning lobe 100b which are connected by a web 170. The electrical component 100b may comprise a twisted pair of conductive wires 180. The optical component 100a may comprise a cable jacket 130 surrounding an optical subunit 160. The optical subunit 160 comprises an optical transmission element 110 which comprises at least one optical waveguide 111 being surrounded by a tight buffer tube112. A strength member 140 is arranged around the optical transmission element 110. The strength member 140 may be configured as a plurality of aramid yarns being distributed around the optical transmission element 110. The strength member 140 is surrounded by a jacket of the optical subunit 150 forming the external sheath of the optical subunit 160.

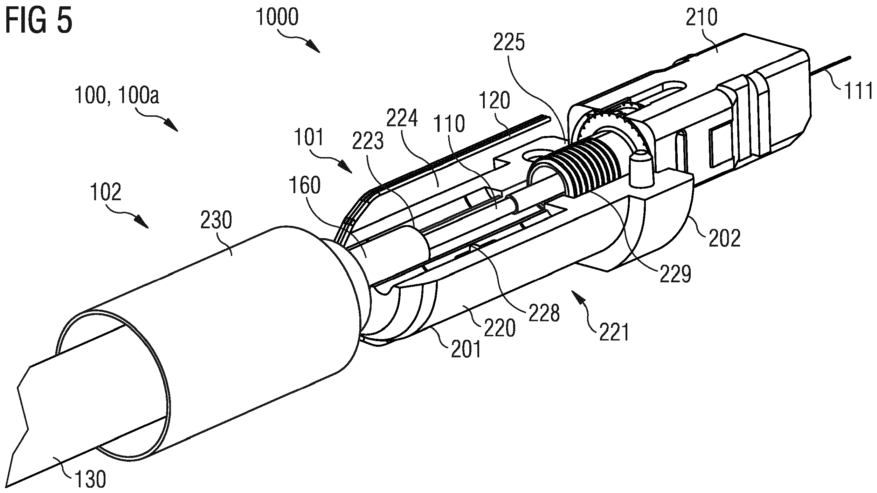

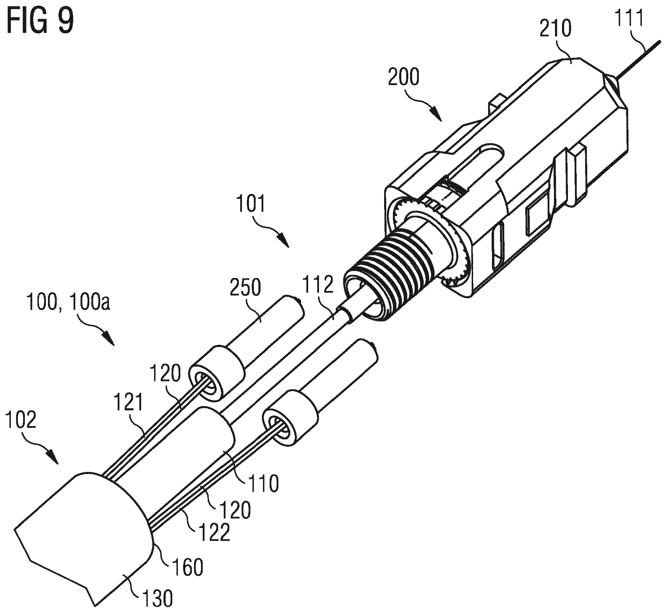

The optical cable 100 further comprises a plurality of tensile elements 120. The tensile elements 120 may be embedded in the cable jacket 130. According to a possible embodiment of the optical cable 100, the tensile elements 120 may be metal wires. For instance, the metal wires may be configured as brass-plated steel wires. The tensile elements 120 may be arranged in two bunches 121 and 122 of steel wires. By way of example, each of the bunches may comprise three single wires having a diameter of 0.25 mm, but any suitable number of bunches, wires per bunch or arrangement in the cable are possible. In the following Figures 5 to 8, the tensile elements are configured as metal tensile elements, whereas in the subsequent Figures 9, 11 and 12, the tensile elements may be configured as metal tensile elements or as tensile elements comprised of any suitable material.

Figure 5 shows a perspective view of a preconnectorized optical cable assembly 1000. The optical cable 100 may be configured as the figure-eight cable shown in Figure 4. The electrical component 100b is removed so that Figure 5 only shows the optical component 100a of the cable. The preconnectorized optical cable 100 comprises at an end section 101 the optical transmission element 110 that comprises at least one optical waveguide 111. The cable jacket 130 is removed so that the tensile elements 120 are exposed at the end section 101 of the cable. The preconnectorized optical cable 100 comprises at a section 102 of the cable the complete optical component 100a including the optical subunit 160 and the cable jacket 130 surrounding the optical subunit 160. The tensile elements 120 are embedded in the material of the cable jacket 130.

The at least one plug connector 200 is attached to the end section 101 of the cable 100, thereby connectorizing the at least one optical waveguide 111. The at least one plug connector 200 comprises a connector assembly 210 being configured for securing the at least one optical waveguide 111 and a crimp housing 220. The crimp housing 220 has a longitudinal passageway 223 for passing the at least one optical waveguide 111 therethrough. The crimp housing 220 further comprises at least one cable clamping portion 224 and a connector assembly clamping portion 225. The at least one cable clamping portion 224 secures the optical transmission element 110. The connector assembly clamping portion 225 secures a portion of the connector assembly 210 and optical waveguide 111 is secured in the ferrule of the connector assembly.

Figure 5 shows the connector assembly 210 for securing the at least one optical waveguide 111 being configured as an SC connector that is attached to the at least one optical waveguide 111. The connector assembly 210 may have another design, for example, may be configured as a LC, FC, ST, MT, or MT-RJ connector. After the connector assembly 210 is attached to the end section 101 of the cable, the at least one optical waveguide 111 secured in the ferrule is polished, and the connector assembly 210 will be put into the crimp housing 220. The optical transmission element 110 is disposed in the longitudinal passageway 223 of the crimp housing 220.

The crimp housing 220 may comprise at least two shells of which one of the shells 221 is shown in Figure 5. Each of the at least two shells of the crimp housing 220 has a cavity 228 formed in a respective first portion 201 of the at least two shells. The respective cavity 228 of the shells is formed for placing the optical transmission element 110 in the respective shell of the crimp housing 220. The respective cavity 228 of the first portion 201 of the at least two shells of the crimp housing 220 is arranged in the at least one cable clamping portion 224 of the crimp housing and forms the lower part of the longitudinal passageway 223 for passing the at least one optical waveguide 111 therethrough. Figure 5 shows the optical transmission element 110 being disposed in the longitudinal passageway 223/the cavity 228 of the shell 221 of the crimp housing 220.

Each of the at least two shells of the crimp housing has a respective recess 229 formed in a second portion 202 of the at least two shells of the crimp housing 220. The respective recess 229 of the shells is formed for supporting/securing a portion of the connector assembly 210.

In the mated configuration of the crimp housing 220, the shells are placed on each other. The respective cavity 228 of the shells form the longitudinal passageway 223 in the cable clamping portion 224 of the crimp housing. The portion of the shells comprising the respective recess 229 form the connector assembly clamping portion 225 of the crimp housing.

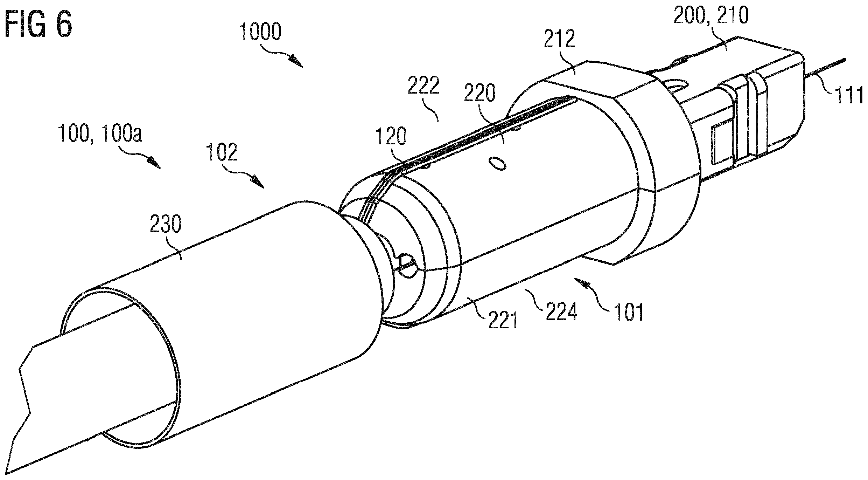

Figure 6 shows the preconnectorized optical cable assembly 1000 comprising the cable 100 with the end section 101 and the end section 102. The cable 100 comprises the optical component 100a and the plug connector 200 comprising the connector assembly 210 and the crimp housing 220. The crimp housing 220 comprises the shell 221 and the shell 222 which are mated. The shell 222 is identically formed as the shell 221 shown in Figure 5. In the mated configuration of the shells 221 and 222 the respective cavities 228 of the shells 221, 222 form the passageway 223 of the crimp housing 220. The optical transmission element 110 is disposed in the passageway 223 of the crimp housing 220. In order to secure the tensile elements 120 to the plug connector 200, the tensile elements 120 are put around the mated shells 221, 222 of the crimp housing 220. As shown in Figure 6, the tensile elements 120 are placed on the outer surface of the crimp housing 220/the shells 221, 222 of the crimp housing.

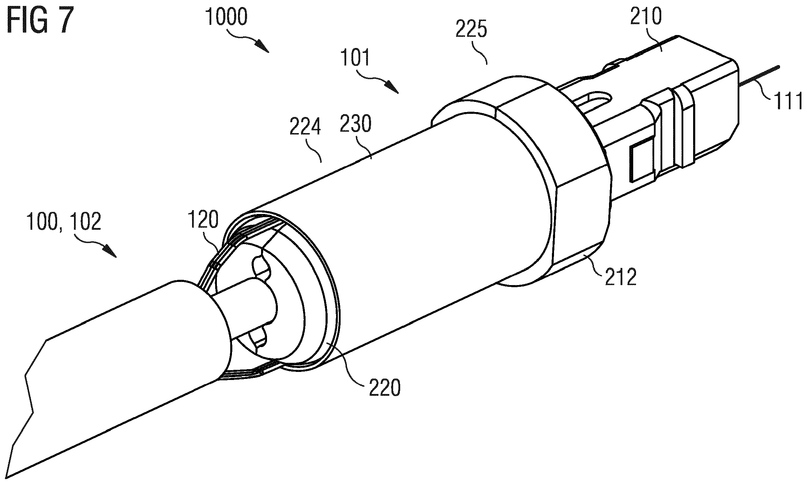

The preconnectorized cable assembly 1000 further comprises a crimp band 230 shown in Figure 7. In a mated configuration of the crimp housing 220, the crimp band 230 holds the at least two shells 221 and 222 of the crimp housing 220 together. After the tensile elements 120 having placed on the outer surface of the crimp housing 220, the crimp band 230 is slid from the cable section 102 to the cable section 101 over the outer surface of the crimp housing 220 and the tensile elements 120. In order to fix the tensile elements 120 to the crimp housing 220/the plug connector 200, the crimp band 230 will be crimped together so that the tensile elements 120 are clamped between the outer surface of the shells 221 and 222 of the crimp housing 220 and the crimp band 230.

Figure 7 shows the preconnectorized optical cable assembly 1000 after the crimp band 230 has been placed over the outer surface of the crimp housing 220. As shown in Figure 7, the crimp band 230 is placed around the crimp housing 220 such that the plurality of tensile elements 120 is arranged between the outer surface of the crimp housing and the crimp band 230. In order to secure and fix the tensile elements 120 to the plug connector 200, the crimp band 230 is crimped so that the tensile elements 120 are clamped between the crimp housing 220 and the crimp band 230. Thus, the position of the tensile elements 120 relative to the plug connector 200 is set.

As illustrated in Figures 6 and 7, the outer structure of the connector assembly clamping portion 225 of the crimp housing 220 may be embodied such that a shoulder 212 is formed. The tensile elements 120 may be arranged on the outer surface of the cable clamping portion 224 of the crimp housing 220 such that the ends of the tensile elements abut on the shoulder 212 of the connector assembly clamping portion 225 before the crimp band 230 is slid over the outer surface of the cable clamping portion 224. When the crimp band 230 is crimped together, the tensile elements are clamped to secure the tensile elements between the crimp housing 220 and the crimp band 230.

The end section 101 of the optical component 100a may be encapsulated by a housing surrounding the connector assembly 210, the crimp housing 220 and the crimp band 230. A possible embodiment of the connector boot 260 of the preconnectorized optical cable assembly is shown in Figure 3.

The exposed tensile elements 120 should be taut so as not to strain the at least one optical waveguide 111 during cable loading. With the design of the preconnectorized optical cable assembly (due to proper interference distance) shown in Figure 7 relatively high pull forces may be achieved without adverse optical performance. For instance, preconnectorized cable assemblies such as shown in Figure 7 may withstand pull forces up to 500 Newtons (N) or more.

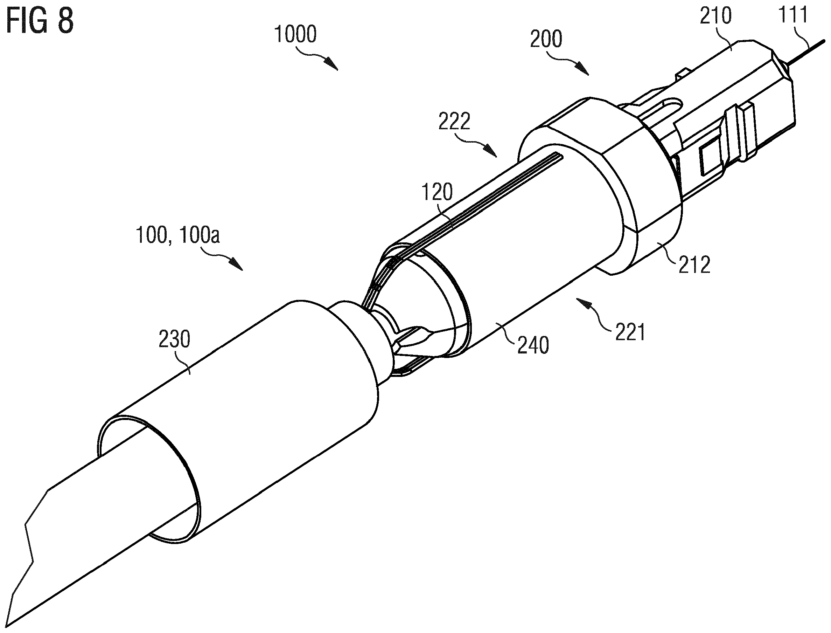

Figure 8 shows another example useful to understand the invention of the preconnectorized optical cable assembly 1000 comprising the optical component 100a and the plug connector 200. The crimp housing 220 may comprise two shells 221, 222 respectively comprising a cavity in their cable clamping portion forming the longitudinal passageway 223 for passing the at least one optical waveguide 111. The shells 221, 222 may be crimped together by means of the crimp band 230. Unlike the embodiment of the preconnectorized optical cable assembly shown in Figure 7, the preconnectorized optical cable assembly of Figure 8 comprises a tube 240 being arranged between the crimp housing 220 and the crimp band 230. According to the embodiment of the preconnectorized optical cable assembly shown in Figure 8, the tensile elements 120 are arranged and secured between the tube 240 and the crimp band 230.

Figure 8 shows the preconnectorized optical cable assembly 1000 before the crimp band 230 is slid over the tube 240. The tensile elements 120 are arranged on the outer surface of the tube 240. The ends of the tensile elements may abut on the shoulder 212 of the connector assembly clamping portion 225. In order to fix the tensile elements 120 to the plug connector 200, the crimp band 230 is slid over the tube 240 and the tensile elements 120 and is then crimped together.

According to the examples of the preconnectorized optical cable assemblies 1000 shown in Figures 7 and 8, the crimp housing 220/the shells 221, 222 of the crimp housing may be made of any suitable material such as a thermoplastic material, for example a glass-filled plastics. The crimp band 230 and the tube 240 can be made of a metallic material, for example made of brass. Thus, the embodiment of the preconnectorized optical cable assembly 1000 shown in Figure 8, wherein the tube 240 is put between the crimp bodies 221, 222 and the tensile elements 120/the crimp band 230, allows to apply higher pull forces in relation to the embodiment of the preconnectorized optical cable assembly 1000 shown in Figure 7, as the embodiment of the preconnectorized optical cable assembly of Figure 8 would result in a crimp of the tensile elements 120 completely in metallic components 230 and 240.

Figure 9 shows another example of a preconnectorized optical cable assembly 1000 comprising the optical component 100a of the cable and the plug connector 200. The optical component 100a comprises at the section 102 the optical subunit 160 being encapsulated by the cable jacket 130. The cable jacket 130, the jacket of the optical subunit 150 and the strength member 140 of the optical cable is removed at the end section 102. The optical cable 100 comprises the optical transmission element 110 including the at least one optical waveguide 111 and the exposed tensile elements 120 at the end section 101 of the optical component 100a of the preconnectorized optical cable 100. The tensile elements may, for example, comprised of metal or may be configured as aramid fibers or fiberglass rovings.

The at least one plug connector 200 is attached to the end section 101 of the optical component, thereby connectorizing the at least one optical waveguide 111. The at least one plug connector 200 comprises the connector assembly 210 for securing the at least one optical waveguide 111. The connector assembly may be configured as one of a SC, LC, FC, ST, MT, and MT-RJ connector.

The at least one plug connector further comprises at least one tensile element securing component 250 for securing the tensile elements 120. The tensile element securing component may be bonded or attached to the cable tensile elements 120 and may be latched or clinched/crimped or hooked, or squeezed/etc. in the crimp housing 220 to provide the cable retention. The tensile element securing component may be configured, for example, as one of a tensile element sleeve, a solder and a small clamp/clip etc.. According to the embodiments shown in Figures 9 to 12, the tensile element securing component 250 is configured as a tensile element sleeve. Figure 9 shows the tensile elements 120 being inserted into respective tensile element sleeves 250.

According to a possible example of the preconnectorized optical cable assembly 1000, the tensile elements 120 of the cable 100 are metal wires such as brass-plated steel wires. In this cable embodiment, the tensile elements 120 may be configured as two bunches 121, 122 of steel wires located on opposite sides of the cable. By way of example, each of the bunches 121, 122 may comprise three single wires having a diameter of 0.25 millimeters (mm), but other suitable materials, number of bunches, tensile elements per bunch, etc are possible.

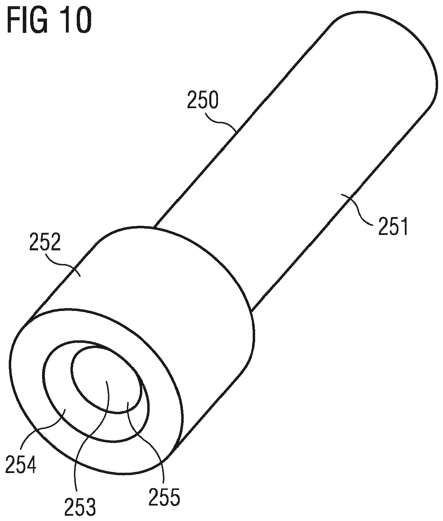

Figure 10 shows an example of the at least one tensile element securing component 250 such as used in the preconnectorized optical cable assembly shown in Figure 9. The tensile element securing component 250 is configured as a tensile element sleeve and may comprise a first section 251 and a second section 252 having an outer portion being larger than the outer portion of the first section 251. In particular, the thickness of the wall of the second section 252 of the tensile element securing component 250 is larger than the thickness of the wall of the first section 251 of the tensile element securing component. By way of example, and not limitation, a cavity 255 of the tensile element securing component for inserting the tensile elements 120 may have the same inner diameter in the first section 251 and the second section 252 of the tensile element securing component. The second section 252 of the tensile element securing component 250 comprises an opening 253 having a chamfered area 254 for inserting the plurality of tensile elements 120 in the cavity 255 of the tensile element securing component 250.

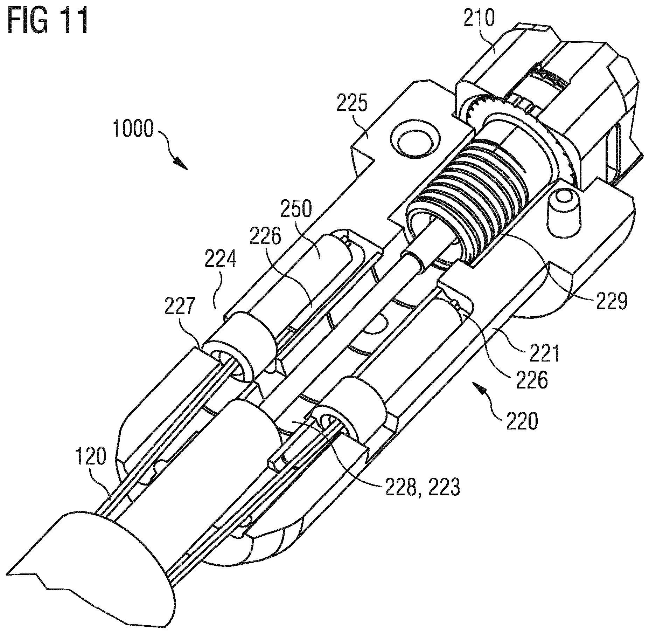

Figure 11 shows a perspective view of an embodiment of the preconnectorized optical cable assembly 1000 comprising a crimp housing 220 having a longitudinal passageway 223 for passing the optical transmission element 110/the at least one optical waveguide 111 therethrough. The crimp housing 220 comprises at least one cable clamping portion 224 and a connector assembly clamping portion 225. The at least one cable clamping portion 224 secures the tensile elements 120. The connector assembly clamping portion 225 secures a portion of the connector assembly 210. The crimp housing 220 comprises at least one groove 226 for depositing the at least one tensile element securing component 250. The at least one groove 226 may comprise a shoulder 227 for propping the at least one tensile element securing component 250.

The crimp housing 220 may comprise at least two shells of which only one shell 221 is shown in Figure 11. The other shell is identically formed. Each of the at least two shells have a cavity 228 formed in a respective first portion 201 of the at least two shells. In the mated configuration of the crimp housing 220, when the shells are arranged on each other, the respective cavity 228 of the first portion 201 of the at least two shells is arranged in the at least one cable clamping portion 224 of the crimp housing 220 and forms the longitudinal passageway 223 of the crimp housing for passing the optical transmission element 110/the at least one optical waveguide 111 therethrough.

Each of the at least two shells has a recess 229 formed in a respective second portion 202 of the at least two shells. In the mated configuration of the crimp housing 220, the respective recess 229 of the second portion 202 of the at least two shells is arranged in the at least one connector assembly clamping portion 225 and secures the portion of the connector assembly 210.

Both shells may be mated for forming the crimp housing 220. The preconnectorized optical cable assembly 1000 may comprises a crimp band, such as shown in Figure 7. In the mated configuration of the crimp housing 220, a crimp band is slid over the two shells of the crimp housing and crimped together to hold the at least two shells together.

In order to manufacture the preconnectorized optical cable assembly 1000 shown in Figures 9 to 12, the connector assembly 210, for example a SC connector, is attached to the at least one optical waveguide and polished. The exposed tensile elements 120 are inserted in the cavity 255 of the tensile element securing components 250, as shown in Figures 9 and 11. In order to secure the tensile elements in the tensile element securing components 250, the first section 251 of the tensile element securing components is crimped with a tool.

As shown in Figure 11, the connector assembly 210 is placed in the connector assembly clamping portion 225 of one of the shells of the crimp housing 220. The optical transmission element 110 is disposed in the cable clamping portion 224 of the shell of the crimp housing 220. The tensile element securing components 250 are placed in the grooves 226 of the shell of the crimp housing 220. The second section 252 of the tensile element securing components abuts on the shoulder 227 of the groove 226. The grooves 226 in the shells prop the tensile element securing components 250 up to reach the required tensile rating. The bigger outer portion such as a diameter of the second section 252 of the tensile element securing component 250 improves the surface pressure of the tensile element securing component in the shells of the crimp housing.

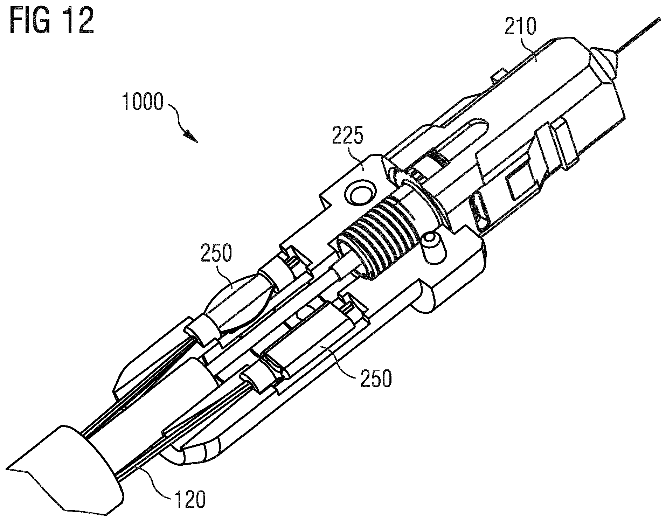

Figure 12 shows the preconnectorized optical cable assembly 1000, wherein the connector assembly 210 is disposed in the connector assembly clamping portion 225 and the optical transmission element 110 is arranged in the cable clamping portion 224 of one of the shells of the crimp housing 220. The tensile element securing components 250 may be crimped in different shapes of which two variants are shown in Figure 12. The tensile element securing components 250 with the pinched tensile elements 120 are placed in the grooves 226 of one of the shells of the crimp housing. The second shell is then placed on top of the first shell, and the two shells are fixed together by a crimp band. The assembly may be encapsulated by a housing.

According to the second embodiment of the preconnectorized optical cable assembly shown in Figures 9 to 12, the position of the tensile elements 120 relative to the plug connector 200 is set by placing the tensile element securing components 250 in the grooves 226 of the shells of the crimp housing 220. The exposed tensile elements 120 should be taut so as not to strain the at least one optical fiber during cable loading. The designs of the preconnectorized optical cable assembly 1000 shown in Figures 11 and 12 withstand pull forces above 500 N to be applied to the cable/plug connector. The tensile element securing components 250 are preferably made of stainless steel to achieve these high pull forces. The steel sleeves especially bond well with tensile elements being configured as steel wires when crimped.

Figures 9 to 12 show the tensile element securing component 250 being configured as a tensile element sleeve. The tensile elements 120 may be inserted into the sleeve 250 and the sleeve may be crimped, for example at the first section 251, to fix the tensile elements within the tensile element sleeve. According to another possible embodiment, the tensile element securing component 250 may be bonded to the tensile elements, for example by means of a soldering agent. According to an alternative embodiment, the tensile elements 120 may be attached to the tensile element securing component 250 by means of a suitable adhesive component. The adhesive component to be used is dependent on the material of the tensile element securing component 250.

If the tensile element securing component is configured as a sleeve, the tensile elements 120, for example metal wires, may be secured in the sleeve by deforming the sleeve so that the tensile elements 120 are clinched/crimped and/or squeezed within the cavity of the sleeve. The tensile securing component may further be configured as a latching mechanism to latch the tensile elements in the tensile element securing component. After latching, the tensile element securing component 250 with the tensile elements 120 latched therein may be placed in the groove 226 and secured in the crimp housing 220. According to another embodiment, the tensile element securing component may be configured as a hook-shaped component. After fixing the tensile elements at the hook-shaped tensile element securing component, the tensile element securing component may be hooked in an appropriate configured groove 226 of the crimp housing to be secured at the crimp housing.

According to another embodiment, the tensile element securing component may be configured as a clamp and clip device. The clamp and clip device may be embodied as a kind of Chinese finger toy. In particular, the clamp and clip device may be configured such that the tensile elements 120 may be inserted one-way and the cavity of the device in which the tensile elements 120 are inserted is tighten when the tensile elements 120 are pulled in the other way. Besides the described configuration of the clamp and clip device, any other securing of the tensile elements is possible. The tensile element securing component may, for example, be embodied as a mechanical fastener. According to a possible embodiment of a mechanical fastener mechanism, the tensile element securing component may be configured as a sleeve comprising a cavity for receiving the tensile elements, wherein the sleeve is provided with a hole comprising an inner thread for turning a screw downward into the cavity of the tensile element securing component and fixing the tensile elements within the cavity.

According to another embodiment, the tensile element securing component may comprise a cavity for receiving the tensile elements, wherein the cavity may comprise a groove or slot being configured as a glue reservoir to provide a glue for adhering the tensile elements within the cavity of the tensile element securing component. The glue may be provided as a glue blob within the glue reservoir.

The type of attachment for securing the tensile elements to the tensile element securing component may depend on factors such as the materials. In case of using metal tensile elements, soldering of the tensile elements to the tensile element securing component as well as fixing the tensile elements by a crimping or clinching process, may be a suited method for securing the tensile elements to the tensile element securing component and to the crimp housing. Another aspect to be considered when selecting one of the different attachment methods is the pull-strength desired for the cable assembly.

The concept of the preconnectorized optical cable assembly is not limited to the figure-eight cable shown in Figure 4. The optical cable 100 may be configured as a cable having another design. The tensile elements 120 may be configured as a strength component or a strength member. The crimp housing 220 and the crimp band 230 are not limited to the designs shown in the figures. The crimp housing and the tensile element securing component may rather have different shapes and dimensions as long as they allow for proper securing of the tensile elements. The amount of the tensile elements and their distribution in the cable jacket can be different as long as a proper cable tensile rating is met. Furthermore, the material, dimensions and shape of the crimp band or the tensile element securing components can be different as long as the assembly tensile rating is met.

The examples of the preconnectorized optical cable assembly 1000 shown in Figures 7 and 8 as well; as the embodiments according to the invention illustrated in Figures 11 and 12 enable a pretermination of the optical cable to provide the preconnectorized optical cable assembly 1000. The embodiments of the preconnectorized optical cable assembly 1000 allow that the tensile elements 120, for example the steel wires, are encapsulated and protected against corrosion. Furthermore, the maximum pull force on the cable and the plug connector is well-defined and not dependent on the skill of an installer. Additionally, the whole assembly becomes robust (twist-, flex-proof) and meets hardened connector's requirements. As opposed to Kevlar strain relieved assemblies, the cable assembly 1000 can break at a certain tensile load to serve i.a. human safety purposes.

### List of Reference Signs

- 100: optical cable
- 100a: optical component
- 100b: electrical component
- 110: optical transmission element
- 120: tensile element
- 130: cable jacket
- 140: strength member
- 150: jacket of optical subunit
- 160: optical subunit
- 170: web
- 180: twisted wire pair
- 200: plug connector
- 210: connector assembly
- 220: crimp housing
- 221, 222: shells of the crimp housing
- 230: crimp band
- 240: tube
- 250: tensile element securing component
- 260: connector boot
- 270: protective cap
- 280: coupling nut
- 290: shroud
- 1000: preconnectorized optical cable assembly

## Claims

1. A preconnectorized optical cable assembly, comprising:
a cable (100) comprising:
- an optical transmission element (110) comprising at least one optical waveguide (111),
- a plurality of tensile elements (120),
- a cable jacket (130), and
at least one plug connector (200), the at least one plug connector being attached to an end section (101) of the cable (100), thereby connectorizing the at least one optical waveguide (111), the at least one plug connector (200) comprising:
- a connector assembly (210) for securing the at least one optical waveguide (111),
- a crimp housing (220) having a longitudinal passageway (223) for passing the at least one optical waveguide (110) therethrough, at least one cable clamping portion (224), and a connector assembly clamping portion (225), wherein the at least one cable clamping portion (224) secures the plurality of tensile elements (120), and the connector assembly clamping portion (225) secures a portion of the connector assembly (210),
- at least one tensile element securing component (250) attached to at least one of the plurality of tensile elements (120),
- wherein the crimp housing (220) comprises at least one groove (226) for receiving the at least one tensile element securing component (250).

2. The preconnectorized optical cable assembly as claimed in claim 1,
wherein the at least one groove (226) comprises a shoulder (227) for receiving a portion of the at least one tensile element securing component (250).

3. The preconnectorized optical cable assembly as claimed in one of the claims 1 or 2,
wherein the at least one tensile element securing component (250) comprises a first section (251) being crimped to secure the at least one of the plurality of tensile elements (120) in the at least one tensile element securing component (250).

4. The preconnectorized optical cable assembly as claimed in claim 3,
wherein the at least one tensile element securing component (250) comprises a second section (252) having an outer portion being larger than the outer portion of the first section (251) of the at least one tensile element securing component.

5. The preconnectorized optical cable assembly as claimed in claim 4,
wherein the second section (252) of the at least one tensile element securing component (250) comprises an opening (253) having a chamfered area (254) for inserting one of the plurality of tensile elements (120) into the at least one tensile element securing component (250).

6. The preconnectorized optical cable assembly as claimed in the claims 1 to 5, comprising:
a crimp band (230) being arranged around the crimp housing (220).

7. The preconnectorized optical cable assembly of claims 1 to 6,
the plurality of tensile elements (120) being one of a strength component and a strength member.

8. The preconnectorized optical cable assembly of claims 1 to 7,
the plurality of tensile elements (120) being metal wires.

9. The preconnectorized optical cable assembly of claims 1 to 8,
the plurality of tensile elements (120) being arranged in at least two bunches (121, 122) of steel wires in the cable.

10. The preconnectorized optical cable assembly of claims 1 to 9,
the connector assembly (210) being an SC connector assembly.

11. The preconnectorized optical cable assembly of claims 1 to 10,
wherein the at least one plug connector (200) further comprises a shroud (290).

12. The preconnectorized optical cable assembly of claims 1 to 11,
wherein the at least one tensile element securing component (250) comprises a first tensile element securing component attached to a first one of the plurality of tensile elements and a second tensile element securing component attached to a second one of the plurality of tensile elements, and the at least one groove (226) comprises a first groove for receiving the first tensile element securing component (250) and a second groove for receiving the second tensile element securing component (250).

## Patentansprüche

1. Vorkonnektorisierte optische Kabelanordnung, umfassend:
ein Kabel (100), das umfasst:
- ein optisches Übertragungselement (110), das mindestens einen optischen Wellenleiter (111) umfasst,
- mehrere Zugelemente (120),
- einen Kabelmantel (130), und
mindestens einen Steckverbinder (200), wobei der mindestens eine Steckverbinder an einem Endabschnitt (101) des Kabels (100) angebracht ist, wodurch der mindestens eine optische Wellenleiter (111) konnektorisiert ist, wobei der mindestens eine Steckverbinder (200) umfasst:
- eine Verbinderbaugruppe (210), um den mindestens einen optischen Wellenleiter (111) zu sichern,
- ein Crimp-Gehäuse (220) mit einem Längsdurchgang (223), um den mindestens einen optischen Wellenleiter (110) durch diesen hindurchzuführen, mindestens einen Kabelklemmabschnitt (224), und einen Verbinderbaugruppenklemmabschnitt (225), wobei der mindestens eine Kabelklemmabschnitt (224) die mehreren Zugelemente (120) sichert, und der Verbinderbaugruppenklemmabschnitt (225) einen Teil der Verbinderbaugruppe (210) sichert,
- mindestens eine Zugelementsicherungskomponente (250), die an mindestens einem der mehreren Zugelemente (120) angebracht ist,
- wobei das Crimp-Gehäuse (220) mindestens eine Nut (226) umfasst, um die mindestens eine Zugelementsicherungskomponente (250) aufzunehmen.

2. Vorkonnektorisierte optische Kabelanordnung nach Anspruch 1,
wobei die mindestens eine Nut (226) eine Schulter (227) umfasst, um einen Teil der mindestens einen Zugelementsicherungskomponente (250) aufzunehmen.

3. Vorkonnektorisierte optische Kabelanordnung nach einem der Ansprüche 1 oder 2,
wobei die mindestens eine Zugelementsicherungskomponente (250) einen ersten Abschnitt (251) umfasst, der gecrimpt ist, um das mindestens eine der mehreren Zugelemente (120) in der mindestens einen Zugelementsicherungskomponente (250) zu sichern.

4. Vorkonnektorisierte optische Kabelanordnung nach Anspruch 3,
wobei die mindestens eine Zugelementsicherungskomponente (250) einen zweiten Abschnitt (252) mit einem Außenteilbereich umfasst, der größer ist als der Außenteilbereich des ersten Abschnitts (251) der mindestens einen Zugelementsicherungskomponente.

5. Vorkonnektorisierte optische Kabelanordnung nach Anspruch 4,
wobei der zweite Abschnitt (252) der mindestens einen Zugelementsicherungskomponente (250) eine Öffnung (253) mit einer abgeschrägten Fläche (254) umfasst, um eines der mehreren Zugelemente (120) in die mindestens eine Zugelementsicherungskomponente (250) einzustecken.

6. Vorkonnektorisierte optische Kabelanordnung nach den Ansprüchen 1 bis 5, umfassend:
ein Crimp-Band (230), das um das Crimp-Gehäuse (220) herum angeordnet ist.

7. Vorkonnektorisierte optische Kabelanordnung nach den Ansprüchen 1 bis 6,
wobei es sich bei den mehreren Zugelementen (120) um ein Festigkeitsbauteil und/oder ein Festigkeitselement handelt.

8. Vorkonnektorisierte optische Kabelanordnung nach den Ansprüchen 1 bis 7,
wobei es sich bei den Zugelementen (120) um Metalldrähte handelt.

9. Vorkonnektorisierte optische Kabelanordnung nach den Ansprüchen 1 bis 8,
wobei die mehreren Zugelemente (120) in mindestens zwei Bündeln (121, 122) von Stahldrähten im Kabel angeordnet sind.

10. Vorkonnektorisierte optische Kabelanordnung nach den Ansprüchen 1 bis 9,
wobei es sich bei der Verbinderbaugruppe (210) um eine SC-Verbinderbaugruppe handelt.

11. Vorkonnektorisierte optische Kabelanordnung nach den Ansprüchen 1 bis 10,
wobei der mindestens eine Steckverbinder (200) darüber hinaus eine Abdeckung (290) umfasst.

12. Vorkonnektorisierte optische Kabelanordnung nach den Ansprüchen 1 bis 11,
wobei die mindestens eine Zugelementsicherungskomponente (250) eine erste Zugelementsicherungskomponente, die an einem ersten der mehreren Zugelemente angebracht ist, und eine zweite Zugelementsicherungskomponente umfasst, die an einem zweiten der mehreren Zugelemente angebracht ist, und die mindestens eine Nut (226) eine erste Nut, um die erste Zugelementsicherungskomponente (250) aufzunehmen, und eine zweite Nut umfasst, um die zweite Zugelementsicherungskomponente (250) aufzunehmen.

## Revendications

1. Ensemble de câble optique préconnectorisé, comprenant :
un câble (100) comprenant :
- un élément de transmission optique (110) comprenant au moins un guide d'onde optique (111),
- une pluralité d'éléments résistants à la traction (120),
- une gaine de câble (130), et
au moins un connecteur mâle (200), l'au moins un connecteur mâle étant attaché à une section d'extrémité (101) du câble (100), connectorisant ainsi l'au moins un guide d'onde optique (111), l'au moins un connecteur mâle (200) comprenant :
- un ensemble connecteur (210) pour fixer l'au moins un guide d'onde optique (111),
- un logement de sertissage (220) présentant un passage longitudinal (223) pour faire passer l'au moins un guide d'onde optique (110) à travers lui, au moins une partie de serrage de câble (224), et une partie de serrage d'ensemble connecteur (225), sachant que l'au moins une partie de serrage de câble (224) fixe la pluralité d'éléments résistants à la traction (120), et la partie de serrage d'ensemble connecteur (225) fixe une partie de l'ensemble connecteur (210),
- au moins un composant de fixation d'élément résistant à la traction (250) attaché à au moins un de la pluralité d'éléments résistants à la traction (120),
- sachant que le logement de sertissage (220) comprend au moins une rainure (226) pour recevoir l'au moins un composant de fixation d'élément résistant à la traction (250) .

2. L'ensemble de câble optique préconnectorisé tel que revendiqué dans la revendication 1,
sachant que l'au moins une rainure (226) comprend un épaulement (227) pour recevoir une partie de l'au moins un composant de fixation d'élément résistant à la traction (250) .

3. L'ensemble de câble optique préconnectorisé tel que revendiqué dans l'une des revendications 1 ou 2,
sachant que l'au moins un composant de fixation d'élément résistant à la traction (250) comprend une première section (251) qui est sertie pour fixer l'au moins un de la pluralité d'éléments résistants à la traction (120) dans l'au moins un composant de fixation d'élément résistant à la traction (250).

4. L'ensemble de câble optique préconnectorisé tel que revendiqué dans la revendication 3,
sachant que l'au moins un composant de fixation d'élément résistant à la traction (250) comprend une deuxième section (252) présentant une partie extérieure qui est plus grande que la partie extérieure de la première section (251) de l'au moins un composant de fixation d'élément résistant à la traction.

5. L'ensemble de câble optique préconnectorisé tel que revendiqué dans la revendication 4,
sachant que la deuxième section (252) de l'au moins un composant de fixation d'élément résistant à la traction (250) comprend une ouverture (253) présentant une zone chanfreinée (254) pour insérer l'un de la pluralité d'éléments résistants à la traction (120) dans l'au moins un composant de fixation d'élément résistant à la traction (250).

6. L'ensemble de câble optique préconnectorisé tel que revendiqué dans les revendications 1 à 5, comprenant :
une bande de sertissage (230) agencée autour du logement de sertissage (220).

7. L'ensemble de câble optique préconnectorisé des revendications 1 à 6,
la pluralité d'éléments résistants à la traction (120) étant soit un composant de renfort, soit un élément de renfort.

8. L'ensemble de câble optique préconnectorisé des revendications 1 à 7,
la pluralité d'éléments résistants à la traction (120) étant des fils métalliques.

9. L'ensemble de câble optique préconnectorisé des revendications 1 à 8,
la pluralité d'éléments résistants à la traction (120) étant agencés dans au moins deux faisceaux (121, 122) de fils d'acier dans le câble.

10. L'ensemble de câble optique préconnectorisé des revendications 1 à 9,
l'ensemble connecteur (210) étant un ensemble connecteur SC.

11. L'ensemble de câble optique préconnectorisé des revendications 1 à 10,
sachant que l'au moins un connecteur mâle (200) comprend en outre un épaulement (290).

12. L'ensemble de câble optique préconnectorisé des revendications 1 à 11,
sachant que l'au moins un composant de fixation d'élément résistant à la traction (250) comprend un premier composant de fixation d'élément résistant à la traction attaché à un premier de la pluralité d'éléments résistants à la traction et un deuxième composant de fixation d'élément résistant à la traction attaché à un deuxième de la pluralité d'éléments résistants à la traction, et l'au moins une rainure (226) comprend une première rainure pour recevoir le premier composant de fixation d'élément résistant à la traction (250) et une deuxième rainure pour recevoir le deuxième composant de fixation d'élément résistant à la traction (250).
